(19) Europäisches Patentamt
European Patent Office
Office européen des brevets

(11) **EP 4 782 296 A1**

(12) **EUROPEAN PATENT APPLICATION**

(43) Date of publication:
**29.07.2026 Bulletin 2026/31**

(21) Application number: **25175938.7**

(22) Date of filing: **13.05.2025**

(51) International Patent Classification (IPC):
**B60W 50/00** (2006.01)  **B60W 40/105** (2012.01)
**B60W 40/13** (2012.01)

(52) Cooperative Patent Classification (CPC):
**B60W 50/0097; B60W 40/105; B60W 40/13;**
B60W 2050/0013; B60W 2050/0022;
B60W 2050/0051; B60W 2520/10; B60W 2520/105;
B60W 2520/14; B60W 2520/28; B60W 2530/20;
B60W 2530/209; B60W 2556/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.01.2025 KR 20250009546**

(71) Applicant: **Hyundai Mobis Co., Ltd.
Gangnam-gu
Seoul 06141 (KR)**

(72) Inventor: **HWANG, Woo Hyun
16891 Yongin-si (KR)**

(74) Representative: **Vossius & Partner
Patentanwälte Rechtsanwälte mbB
Siebertstrasse 3
81675 München (DE)**

(54) **METHOD AND APPARATUS FOR PREDICTING STATE OF VEHICLE BASED ON DYNAMIC DATA**

(57) A method and an apparatus for predicting a state of a vehicle based on dynamic data are disclosed. According to one aspect of the present disclosure, a method is provided for predicting a state of a vehicle based on dynamic data, wherein the method includes: collecting driving data of a vehicle; detecting a change in a driving environment of the vehicle based on the driving data; generating dynamic data based on the driving data; predicting a current state of the vehicle based on the dynamic data; and generating a final prediction for a current state of the vehicle based on the prediction for an initial state of the vehicle and the prediction for the current state of the vehicle.

| |
|---|
| Driving data collection unit — *101* |
| Situation change detection unit — *103* |
| Data characteristic extraction unit — *105* |
| First vehicle state prediction unit — *107* |
| Second vehicle state prediction unit — *109* |
| Vehicle state Final prediction unit — *111* |

*FIG. 1*

EP 4 782 296 A1

**Description**

## TECHNICAL FIELD

The present disclosure relates to a method and an apparatus for predicting a state of a vehicle based on dynamic data.

## BACKGROUND

The statements in this section merely provide background information related to the present disclosure and do not necessarily constitute prior art.

With respect to vehicle control systems, the importance of techniques for predicting vehicle conditions while driving and performing adaptive control in real-time based thereon is increasing. In particular, dynamic variables such as the speed of the vehicle need to be accurately predicted in order to maintain the stability and efficiency of the vehicle.

Existing vehicle state prediction technologies are designed to operate in a manner that predicts the state of a vehicle under certain conditions based on a linear model. The existing vehicle state prediction technology has a limitation in that a nonlinear external factor such as a change in a slope of a road, a change in weather, and a change in a vehicle load is not reflected in the vehicle state prediction, and thus accuracy of the prediction is poor. In addition, the existing vehicle state prediction technology has a limitation in that the data structure does not change even when the driving environment of the vehicle changes, and the accuracy of the prediction is poor.

Accordingly, there is a need for technologies for generating dynamic data reflecting the changing driving environment of a vehicle and predicting the state of the vehicle based thereon.

## SUMMARY

An object of the present disclosure is to provide a method and an apparatus capable of more accurately predicting a state of a vehicle. Specifically, a main object of the present invention is to provide a method and an apparatus that generate dynamic data reflecting a changing driving environment of a vehicle, and combine a result of predicting a state of a vehicle based on basic data generated based on the driving environment of an initial vehicle and a result of predicting the state of the vehicle based on the dynamic data to generate a final prediction for the state of the vehicle.

The technical objects of the present disclosure are not limited to those described above, and other technical objects not mentioned above may be understood clearly by those skilled in the art from the descriptions given below.

According to one aspect of the present disclosure, the present disclosure provides a method for predicting a state of a vehicle based on dynamic data including collecting driving data of a vehicle, detecting a change in a driving environment of the vehicle based on the driving data, generating dynamic data based on the driving data, predicting a current state of the vehicle based on the dynamic data, and generating a final prediction for a current state of the vehicle based on the prediction for an initial state of the vehicle and the prediction for the current state of the vehicle.

The detecting of the change in the driving environment of the vehicle may include determining whether at least one or more of a first condition, a second condition, and a third condition, which first, second and third conditions are different from one another, are satisfied based on the driving data of the vehicle.

The first condition may be a condition set based on a change rate of the driving data during a predetermined time interval.

The second condition may be a condition set based on a size of the driving data.

The third condition may be a condition set based on a pattern of the driving data.

The generating of the dynamic data may include adding one or more characteristics different from characteristics included in basic data based on a change in the driving environment of the vehicle, and each of the characteristics included in the basic data may be a characteristic extracted based on an initial driving environment of the vehicle.

The prediction of the initial state of the vehicle may be generated on the basic data of the vehicle.

According to one aspect of the present disclosure, the present disclosure provides an apparatus for predicting a state of a vehicle based on dynamic data including at least one memory storing instructions, and at least one processor, wherein the at least one processor is configured to execute the instructions to perform steps of: collecting driving data of the vehicle, detecting a change in a driving environment of the vehicle based on the driving data, generating dynamic data based on the driving data, predicting a current state of the vehicle based on the dynamic data, and generating a final prediction for a current state of the vehicle based on the prediction for an initial state of the vehicle and the prediction for the current state of the vehicle.

The detecting of the change in the driving environment of the vehicle may include determining whether at least one or more of a first condition, a second condition, and a third condition, which first, second and third conditions are different from one another, are satisfied based on the driving data of the vehicle.

The first condition may be a condition set based on a change rate of the driving data during a predetermined time interval.

The second condition may be a condition set based on a size of the driving data.

The third condition may be a condition set based on a pattern of the driving data.

The generating of the dynamic data may include adding one or more characteristics different from characteristics included in basic data based on a change in the driving environment of the vehicle, and each of the characteristics included in the basic data may be a characteristic extracted based on an initial driving environment of the vehicle.

The prediction of the initial state of the vehicle may be generated on the basic data of the vehicle.

According to an embodiment of the present disclosure, by predicting an initial state of a vehicle by using an extended Kalman filter, it is possible to perform prediction in consideration of a nonlinear driving pattern, thereby improving accuracy of prediction.

According to an embodiment of the present disclosure, by generating dynamic data including a characteristic capable of indicating a changed driving environment each time the driving environment of the vehicle changes, it is possible to improve the accuracy of prediction.

According to an embodiment of the present disclosure, dynamic data is generated by adding a characteristic indicating a driving environment of a vehicle changed based on basic data, so that it is possible to perform predictions that take into account nonlinear driving patterns, thereby improving the accuracy of prediction.

According to an embodiment of the present disclosure, by generating dynamic data and reflecting various environmental changes that occur while the vehicle is driving in real time, it is possible to adapt to the changing driving environment in real time.

According to an embodiment of the present disclosure, by predicting an initial state of a vehicle by using a machine learning model, it is possible to perform prediction in consideration of a nonlinear driving pattern, thereby improving accuracy of prediction.

According to an embodiment of the present disclosure, the vehicle state may be predicted based on the dynamic data by reflecting the latest driving situation of the vehicle, thereby improving the accuracy of prediction.

The technical effects of the present disclosure are not limited to the technical effects described above, and other technical effects not mentioned herein may be understood to those skilled in the art to which the present disclosure belongs from the description below.

## BRIEF DESCRIPTION OF THE DRAWINGS

FIG. 1 is a block diagram schematically illustrating components of a vehicle state prediction apparatus according to an embodiment of the present disclosure.

FIG. 2 is a diagram for describing a process of predicting an initial state of a vehicle by a vehicle state prediction apparatus according to an embodiment of the present disclosure.

FIG. 3 is a diagram for describing a process of finally predicting a current state of a vehicle by a vehicle state prediction apparatus according to an embodiment of the present disclosure.

FIG. 4 is a diagram for describing accuracy of dynamic data-based vehicle state prediction relative to basic data-based vehicle states prediction according to an embodiment of the present disclosure.

FIG. 5 is a flowchart schematically illustrating a dynamic data-based vehicle state prediction method according to an embodiment of the present disclosure.

FIG. 6 is a block diagram schematically illustrating an exemplary computing device that may be used to implement the apparatus and methods described in this disclosure.

## DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

The following detailed description, together with the accompanying drawings, is intended to describe exemplary embodiments of the present invention, and is not intended to represent the only embodiments in which the present invention may be practiced.

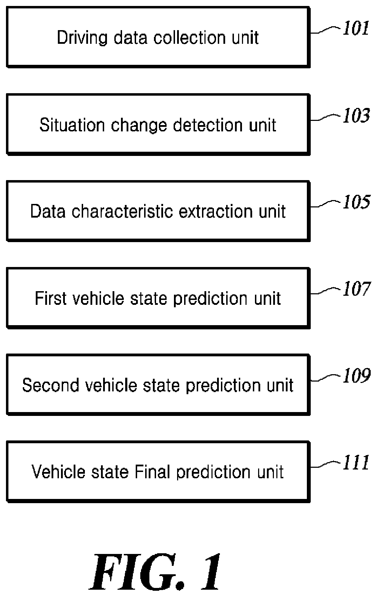

FIG. 1 is a block diagram schematically illustrating components of a vehicle state prediction apparatus according to an embodiment of the present disclosure.

Referring to FIG. 1, a vehicle state prediction device may include a driving data collection unit 101, a situation change detection unit 103, a data characteristic extraction unit 105, a first vehicle state prediction unit 107, a second vehicle state prediction unit 109, and a vehicle state final prediction unit 111.

The driving data collection unit 101 may collect driving data of the vehicle. The driving data may include vehicle speed, vehicle acceleration, vehicle angular velocity. The driving data collection unit 101 may collect driving data obtained based on one or more sensors attached to the vehicle. The one or more sensors attached to the vehicle may include one or more of an accelerometer, a gyroscope, and an inertial measurement unit (IMU) sensor.

The situation change detection unit 103 may detect a change in the driving environment of the vehicle based on the driving data. The situation change detection unit 103 may detect a change in the driving environment of the vehicle by determining whether at least one or more of a first condition, a second condition, and a third condition are satisfied based on the driving data. The first, second and third conditions may be different from one another. The situation change detector 103 may be implemented using some or all of the one or more computing devices 60.

The data characteristic extraction unit 105 may generate basic data or dynamic data based on the driving data. Each of the basic data and the dynamic data may include a plurality of characteristics. The data characteristic extraction unit 105 may extract one or more characteristics based on the driving data, and may generate basic data and dynamic data based on the extracted characteristics. The data characteristic extraction unit 105 may be implemented using some or all of the one or more computing devices 60.

The data characteristic extraction unit 105 may extract one or more characteristics based on initial driving data and generate basic data based on the extracted characteristics. The basic data may take the form of a dataset.

Table 1

| Properties | Description of Properties |
|---|---|
| Speed | Velocity Value of Vehicle |
| Acceleration | Acceleration Value of Vehicle |
| Angular velocity | Rotational Motion State of Vehicle |
| Wheel Speed | Rotational Speed of Each Wheel |
| GPS Coordinates | Position Information of Vehicle |
| Tire State | Pressure and Wear Conditions of Tires |
| Fuel State | Amount and Consumption of Fuel |

Table 1 is a table to illustrate examples of characteristics that may be included in the basic data. The basic data may include one or more of speed, acceleration, angular velocity, wheel speed, GPS coordinates, tire state, fuel state as characteristics.

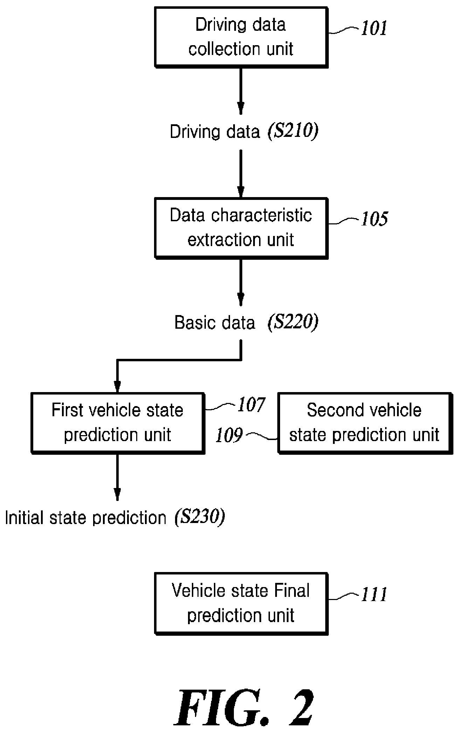

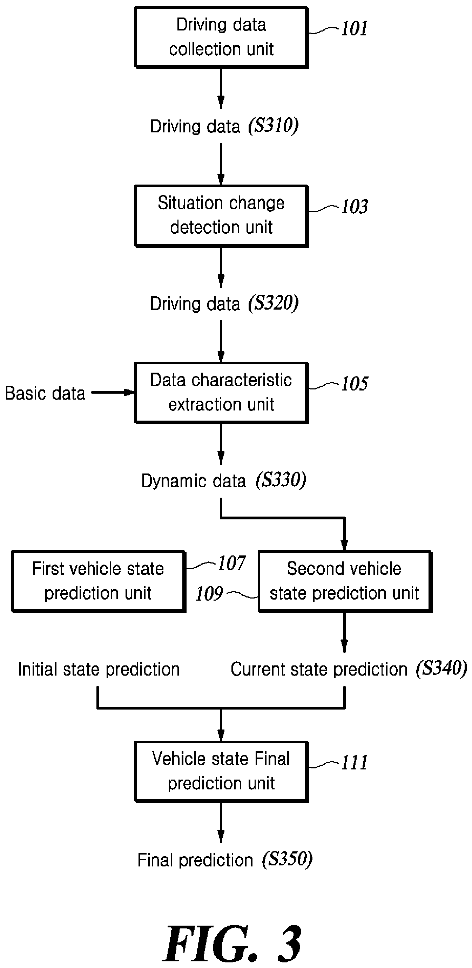

When a change in the driving environment of the vehicle is detected, the data characteristic extraction unit 105 may extract one or more characteristics based on the driving data and generate dynamic data based on the extracted characteristics. The initial driving data and the driving data may differ in the time measured and collected. This will be described in detail below with reference to FIGS. 2 and 3. The process in which the data characteristic extraction unit 105 generates the dynamic data may include a process of adding one or more characteristics different from the characteristics included in the basic data based on a change in the driving environment of the vehicle. That is, the data characteristic extraction unit 105 may generate dynamic data reflecting the changed driving environment by adding one or more characteristics that are not included in the basic data among the characteristics extracted based on the driving data to the basic data in order to update the basic data that is an existing dataset according to the changed environment. The dynamic data may take the form of a dataset.

Table 2

| Situation | Additional Properties | Description of Additional Properties |
|---|---|---|
| Ramp entry | Inclination, Friction coefficient | To reflect the angle of the ramp |

(continued)

| Situation | Additional Properties | Description of Additional Properties |
|---|---|---|
| Road being wet | Friction coefficient, Tire State | To reflect the change of the frictional force between the tire and the road according to the humidity of the road |
| Passenger addition | Vehicle mass, Acceleration pattern | To reflect a change in a vehicle mass and a change in an acceleration pattern due to addition of passengers or cargo |
| Sudden braking | Brake input, Braking distance | To reflect the braking distance and the brake input data of the vehicle during sudden braking |
| Highway driving | Torque, Fuel consumption | To reflect changes in vehicle torque and fuel consumption as vehicle speed rises on a highway |
| Lane change | Lane position, Vehicle position change | To reflect lane position and vehicle position change according to lane movement |

Table 2 is a table to illustrate examples of characteristics that may be additionally included in the dynamic data relative to the basic data. The dynamic data may further include one or more characteristics that differ from the characteristics included in the basic data depending on the context. For example, 'lane position' and 'vehicle position change' may be added when a situation of changing lanes is determined.

The basic data may presuppose a situation in which the vehicle is driving on flat ground. The dynamic data may presuppose a situation in which the vehicle's driving conditions have changed, i.e., a situation in which the vehicle is not driving on flat ground. Situations where the vehicle is not driving on flat ground may include entering a ramp, driving on a wet road, adding passengers, braking, driving on a highway, and changing lanes, as illustrated in Table 2.

The first vehicle state prediction unit 107 may predict an initial state of the vehicle based on the basic data. For example, the first vehicle state prediction unit 107 may predict the initial mass of the vehicle based on basic data such as Table 1 generated based on driving data collected while the vehicle is driving on a flat ground.

In the present disclosure, the 'state' is a word included in an initial state of the vehicle, a current state of the vehicle and a final prediction for the current state of the vehicle, and the like, and may be any one of speed, mass and torque of the vehicle. Therefore, the process of predicting the state of the vehicle may be a process of predicting any one or more of the speed, the mass, and the torque of the vehicle.

The initial state of the vehicle, the current state of the vehicle and the final prediction of the current state of a vehicle differ only in the predicted point in time and may basically mean values for the same characteristic. For example, when it is desired to predict a speed as the state of the vehicle, the first vehicle state prediction unit 107 may predict an initial speed of the vehicle, and the second vehicle state prediction unit 109 may predict a current speed of the vehicle and the vehicle state final prediction unit 111 may generate a final prediction of the current speed of the vehicles. In other words, the initial state of the vehicle, the current state of the vehicle and the final prediction for the current state of a vehicle may all be values for the speed of the vehicle.

The first vehicle state prediction unit 107 may predict an initial state of the vehicle based on the basic data. For example, the first vehicle state prediction unit 107 may predict the initial mass of the vehicle based on basic data such as Table 1 generated based on driving data collected while the vehicle is driving on a flat ground. The first vehicle state prediction unit 107 may be implemented using some or all of the one or more computing devices 60.

The second vehicle state prediction unit 109 may predict a current state of the vehicle based on the dynamic data. For example, the second vehicle state prediction unit 109 may predict the mass of the vehicle based on dynamic data generated based on driving data collected before and after the vehicle enters the slope. The dynamic data may further include characteristics of slope and coefficient of friction when compared to the basic data. The second vehicle state prediction unit 109 may be implemented using some or all of the one or more computing devices 60.

The vehicle state final prediction unit 111 may generate a final prediction of a current state of the vehicle based on the prediction of the initial state of the vehicle and the prediction of the current state of the vehicles. For example, the vehicle state final prediction unit 111 may generate a final prediction of the mass of the vehicle based on the initial mass of the vehicle predicted by the first vehicle state prediction unit 107 and the mass of the vehicles predicted by the second vehicle state prediction unit 109. As an example, the vehicle state final prediction unit 111 may determine a value obtained by arithmetically averaging the initial mass of the vehicle predicted by the first vehicle state prediction unit 107 and the mass of the vehicle estimated by the second vehicle state prediction unit 109 as the final prediction of the mass of the vehicles. The vehicle state final prediction unit 111 may be implemented using some or all of the one or more computing devices 60.

FIG. 2 is a diagram for describing a process of predicting an initial state of a vehicle by a vehicle state prediction apparatus according to an embodiment of the present disclosure.

FIG. 3 is a diagram for describing a process of finally predicting a current state of a vehicle by a vehicle state prediction apparatus according to an embodiment of the present disclosure.

FIG. 2 and FIG. 3 may be processes performed in different time periods. For example, the process of FIG. 3 may be performed after the process of FIG. 2 is performed. In other words, the process of FIG. 3 may presuppose that the process in FIG. 2 has been performed.

FIG. 2 may assume an initial travel situation. Referring to FIG. 2, the driving data collection unit 101 may transmit the driving data to the data characteristic extraction unit (S210). The data characteristic extraction unit 105 may extract one or more characteristics based on the driving data and generate basic data based on the extracted characteristics (S220). The driving data may be initial driving data. In the present disclosure, the initial driving situation and the initial driving data may refer to a situation in which basic data serving as a reference for dynamic data generation is generated and driving data collected in the situation. The situation that is premised for generating the basic data may be a situation in which the vehicle is driving on a flat ground. That is, the vehicle state prediction device may consider a situation in which the state of the vehicle is substantially constant and may serve as a reference of a state change as a situation in which a vehicle travels on a flat ground.

The data characteristic extraction unit 105 may transmit the basic data to the first vehicle state prediction unit 107. The first vehicle state prediction unit 107 may predict an initial state of the vehicle based on the basic data (S230). The first vehicle state prediction unit 107 may predict the initial state of the vehicle based on the basic data by using the extended Kalman filter. The extended Kalman filter may be described using Equations 1-5. The initial state prediction result of the vehicle may be summarized based on the estimation value and the error covariance. The estimation value may be $\hat{x}_k$ in Equation 4 and the error covariance may be $P_k$ in Equation 5.

(Equation 1)

$$\hat{x}_k^- = f(\hat{x}_{k-1})$$

(Equation 2)

$$P_k^- = AP_{k-1}^- A^T + Q$$

(Equation 3)

$$K_k = P_k^- H^T (HP_k^- H^T + R)^{-1}$$

| (Equation 4)

$$\hat{x}_k = \hat{x}_k^- + K_k(z_k - h(\hat{x}_k^-))$$

(Equation 5)

$$P_k = P_k^- - K_k HP_k^-$$

Equation 1 is an equation for calculating a predicted value for an estimated value. $\hat{x}_k^-$ is a predicted value for the k-th estimated value. $\hat{x}_{k-1}$ is a predicted value for the k-1 th estimated value.

Equation 2 is an equation for calculating a prediction value for error covariance. $P_k^-$ is the prediction value for the k-th error covariance. A is a system matrix. $P_{k-1}^-$ is the prediction value for the k-1 th error covariance. Q is system noise.

Equation 3 is an equation for calculating the Kalman gain. $K_k$ is the Kalman gain. $P_k^-$ is the prediction value for the k-th error covariance. H is the system matrix. R is sensor noise.

Equation 4 is an equation for calculating an estimated value. $\hat{x}_k$ is the k-th estimated value. is a predicted value for the k-th estimated value. is the Kalman gain. $\hat{x}_k^-$ is the k-th sensor data. $K_k$ is the Kalman gain. $z_k$ is the k-th estimated value.

Equation 5 is an equation for calculating error covariance. $P_k$ is the k-th error covariance. $P_k^-$ is the prediction value for the k-th error covariance. $K_k$ is the Kalman gain. H is the system matrix.

As described above, the vehicle state prediction device according to an embodiment of the present disclosure predicts the initial state of the vehicle by using the extended Kalman filter, and thus may perform prediction in consideration of a nonlinear driving pattern, thereby improving the accuracy of prediction.

FIG. 3 may assume any driving situation after the initial driving situation. Referring to FIG. 3, the driving data collection unit 101 may transmit driving data to the situation change detection unit 103 (S310). The driving data of FIG. 3 may be any driving data other than the initial driving data. Each of the arbitrary driving situation and the arbitrary driving data in FIG. 3 may mean a driving situation that is not the initial driving situation and a driving situation that are not the initial driving data. Note that the driving situation and the driving data in FIG. 3 may mean the current driving situation of the vehicle and the driving data collected in the situation on the premise that the basic data has been generated based on the initial driving data obtained in the initial driving situation in FIG. 2.

The situation change detection unit 103 may detect a change in the driving environment of the vehicle based on the driving data. A process of detecting the change in the driving environment of the vehicle may include a process of determining whether at least one or more of a first condition, a second condition, and a third condition are satisfied based on the driving data of the vehicle. The first, second and third conditions may be different from one another. Because the situation change detection unit 103 may detect that the driving environment of the vehicle has changed by determining whether at least one or more of the first condition, the second condition, and the third condition are satisfied, the process in which the situation change detection unit 103 determines whether each condition is satisfied may be understood as a process in which the situation change detection unit 103 perform a detection algorithm corresponding to each condition.

The first condition may be a condition set based on the change rate of the driving data. For example, the situation change detection unit 103 may collect a plurality of driving data during a predetermined time interval, calculate a change rate of the driving data based on the driving data, and determine that the first condition is satisfied when a magnitude (e.g., an absolute value) of the calculated change rate is equal to or greater than a threshold value. Furthermore, when it is determined that the first condition is satisfied, the situation change detection unit 103 may determine that there is a change in the driving environment of the vehicle.

(Equation 6)

$$\Delta A(t) = A(t) - A(t-1)$$

(Equation 7)

$$|\Delta A(t)| \geq Threshold$$

Equation 6 is an equation for calculating the rate of change. $\Delta A(t)$ is the rate of change. $A(t)$ is driving data of a specific time period. $A(t-1)$ is the driving data of the immediately preceding time period. The driving data may be, for example, acceleration.

Equation 7 is an equation for determining whether the first condition is satisfied. $|\Delta A(t)|$ is the magnitude of the rate of change. Threshold is a threshold value.

The second condition may be a condition set based on the size of the driving data. For example, when the size of the driving data is equal to or larger than the threshold value, the situation change detection unit 103 may determine that the second condition is satisfied. Furthermore, when it is determined that the second condition is satisfied, the situation change detection unit 103 may determine that there is a change in the driving environment of the vehicle. The driving data may be, for example, an acceleration or a speed.

The third condition may be a condition set based on the pattern of the driving data. The situation change detection unit 103 may determine that the third condition is satisfied when the driving data of the specific time period is not included in the normal variation range of the driving data of a plurality of previous time periods. For example, the situation change detection unit 103 may calculate a moving average and a moving standard deviation of the driving data of a plurality of previous time periods, and determine that the third condition is satisfied when an absolute value of a difference between a specific time period and the moving average is equal to or greater than a certain multiple of the moving standard deviation. Furthermore, when it is determined that the third condition is satisfied, the situation change detection unit 103 may determine that there is a change in the driving environment of the vehicle.

(Equation 8)

$$MA(t) = \frac{1}{N}\sum_{i=0}^{N-1} x(t-i)$$

(Equation 9)

$$\sigma(t) = \sqrt{\frac{1}{N}\sum_{i=0}^{N-1}(x(t-i)-MA(t))^2}$$

(Equation 10)

$$|x(t) - MA(t)| \geq \alpha \cdot \sigma(t)$$

Equation 8 is an equation for calculating a moving average of driving data of a plurality of previous time periods. MA(t) is the moving average.

Equation 9 is an equation for calculating a movement standard deviation of driving data of a plurality of previous time periods. $\sigma(t)$ is the moving standard deviation.

Equation 10 is an equation for determining whether the third condition is satisfied. $\alpha$ is any non-zero constant.

When the driving change is detected, the situation change detection unit 103 may transmit the driving data to the data characteristic extraction unit 105 (S320).

The data characteristic extraction unit 105 may generate dynamic data based on the driving data (S330). The data characteristic extraction unit 105 may obtain basic data. The basic data is generated as a result of performing the process included in FIG. 2, and may be stored in any memory (not shown) included in the vehicle state prediction device. The data characteristic extraction unit 105 may add one or more characteristics different from the characteristics included in the basic data based on a change in the driving environment of the vehicle. Specifically, the data characteristic extraction unit 105 may generate dynamic data by extracting one or more characteristics based on the driving data and updating the basic data by adding a characteristic that is not included in the basic data among the extracted characteristics to the basic data. The data characteristic extraction unit 105 may consider a change in the driving environment of the vehicle when extracting one or more characteristics based on the driving data.

As described above, the vehicle state prediction device according to an embodiment of the present disclosure may improve the accuracy of prediction by generating dynamic data including a characteristic that may indicate a changed driving environment whenever the driving environment of the vehicle changes.

As described above, the vehicle state prediction device according to an embodiment of the present disclosure generates dynamic data by adding a characteristic indicating a driving environment of a vehicle changed based on basic data, and thus may perform prediction in consideration of a nonlinear driving pattern, thereby improving prediction accuracy.

As described above, the vehicle state prediction device according to an embodiment of the present disclosure may generate dynamic data and reflect various environmental changes that occur while the vehicle is driving in real time, thereby adapting to the changing driving environment in real time.

The data characteristic extraction unit 105 may transmit the dynamic data to the second vehicle state prediction unit 109 . The second vehicle state prediction unit 109 may predict the current state of the vehicle based on the dynamic data (S340). The second vehicle state prediction unit 109 may predict the current state of the vehicle based on the dynamic data by using the machine learning model. The machine learning model may be an XGBoost regression model. The machine learning model may be a pretrained model. A training module (not shown) separate from the machine learning model may be used for pre-training of the machine learning model. The training module may fit the machine learning model to the training dataset. The training module may train the machine learning model such that the machine learning model corrects an error for the state prediction of the vehicle. For example, the training module may input input data to the machine learning model, and calculate a loss based on output data output by the machine learning model and ground truth (GT) data mapped to the input data. An mean square error (MSE) may be used as a loss function used for loss, but is not limited thereto. The training module may update the parameters of the machine learning model in a direction such that losses are minimized. For example, the training module may update weights of layers (or nodes) included in the machine learning model based on a backpropagation algorithm.

(Equation 11)

$$\hat{y}_i = \sum_{m=1}^{M} f_m(x_i)$$

(Equation 12)

$$L(\theta) = \sum_{i=1}^{N} l(y_i, \hat{y}_i) + \sum_{m=1}^{N} \Omega(f_m)$$

Equation 11 is an equation for illustrating an example of an XGBoost regression model. $\hat{y}_i$ is a predicted value. $f_m$ is the prediction function of each tree. M is the number of trees. $x_i$ is input data.

Equation 12 is an equation for illustrating an example of a loss function of the XGBoost regression model. $L(\theta)$ is a loss function. l is the loss. $y_i$ is GT data. $\Omega$ is a normalization term.

As described above, the vehicle state prediction device according to an embodiment of the present disclosure may perform prediction in consideration of a nonlinear driving pattern by predicting an initial state of a vehicle using a machine learning model, thereby improving accuracy of prediction.

The second vehicle state prediction unit 109 may transmit the prediction of the current state of the vehicle to the vehicle state final prediction unit 111. The vehicle state final prediction unit 111 may generate a final prediction of the current state of the vehicle based on the prediction of the initial state of the vehicle and the prediction of the current status of the vehicle (S350). The vehicle state final prediction unit 111 may obtain a prediction of an initial state of the vehicle. The prediction of the initial state of the vehicle is generated as a result of performing the process included in FIG. 2, and may be stored in any memory (not shown) included in the vehicle state prediction device. As an example, the vehicle state final prediction unit 111 may determine, as the final prediction of the current state of the vehicle, a value obtained by adding different weights to each of the prediction of the initial state of the vehicle and the prediction of the current state of the vehicle.

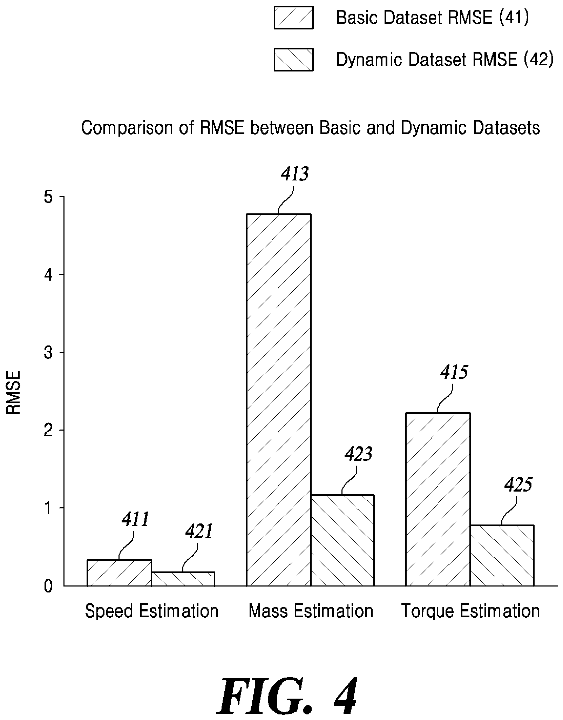

FIG. 4 is a diagram for describing accuracy of dynamic data-based vehicle state prediction relative to basic data-based vehicle states prediction according to an embodiment of the present disclosure.

Referring to FIG. 4, an error 41 in the basic data-based vehicle state prediction and an error 42 in the dynamic data-based vehicle condition prediction are shown.

When comparing an error 411 of the basic data-based prediction and an error 421 of the dynamic data-based prediction with respect to the speed of the vehicle, the error 411 in the basic data-based prediction is greater than the error 421 in the dynamic data-based prediction.

Comparing an error 413 of the basic data-based prediction with an error 423 of the dynamic data-based prediction, with respect to the mass of the vehicle, an error 312 of the basic data-based prediction is greater than the error 423 in the dynamic data-based prediction. In particular, the error 312 of the basic data-based prediction is about four or more times greater than the error 423 of the dynamic data-based prediction.

Comparing an error 415 of the basic data-based prediction with an error 425 of the dynamic data-based prediction, with respect to the torque of the vehicle, the error 415 in the basic data-based prediction is greater than the error 425 in the dynamic data-based prediction. In particular, the error 415 of the basic data-based prediction is more than about twice as large as the error 425 of the dynamic data-based prediction.

As described above, the vehicle state prediction device according to an embodiment of the present disclosure may predict the vehicle state by reflecting the latest driving situation of the vehicle based on the dynamic data, thereby improving the accuracy of the prediction.

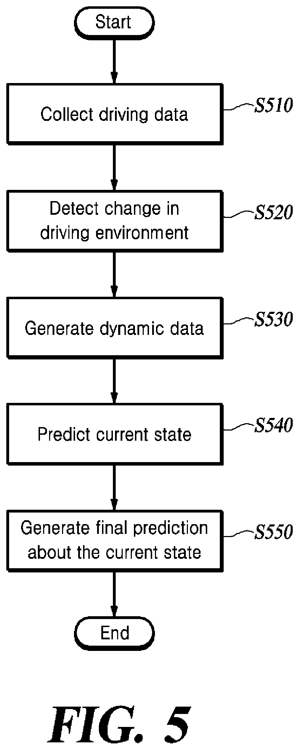

FIG. 5 is a flowchart schematically illustrating a dynamic data-based vehicle state prediction method according to an embodiment of the present disclosure.

Referring to FIG. 5, the vehicle state prediction apparatus may collect driving data of a vehicle (S510).

The vehicle state prediction apparatus may detect a change in a driving environment of the vehicle based on the driving data (S520).

The vehicle state prediction apparatus may generate dynamic data based on the driving data (S530).

The vehicle state prediction apparatus may predict a current state of the vehicle based on the dynamic data (S540).

The vehicle state prediction apparatus may generate a final prediction about the current state of the vehicle, based on the prediction about the initial state of the vehicle and the prediction about the current states of the vehicle (S550).

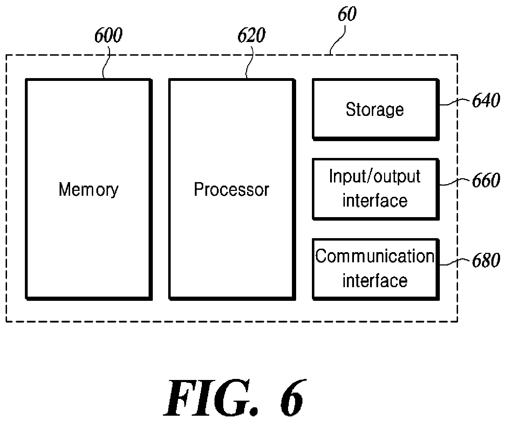

FIG. 6 is a block diagram schematically illustrating an exemplary computing device that may be used to implement the apparatus and methods described in this disclosure.

The computing device 60 may include all or part of a memory 600, a processor 620, a storage 640, an input/output interface 660, and a communication interface 680. The computing device 60 may be a stationary computing device, such as a desktop computer or a server, or a mobile computing device, such as a laptop computer or a smart phone. The computing device 60 may include a specialized hardware accelerator capable of processing operations of an artificial intelligence model in an efficient manner. For example, the computing device 60 may include a graphic processing unit (GPU), a tensor processing unit (TPU), or a neural processing unit (NPU).

The memory 600 may store a program that enables the processor 620 to perform methods or operations according to various embodiments of the present disclosure. For example, a program may include a plurality of instructions executable by the processor 620, and the methods or operations described above may be performed by executing the plurality of instructions by the processor 620. The memory 500 may consist of a single memory or a plurality of memories. In this case, information required to perform the methods or operation according to various embodiments of the present disclosure may be stored in a single memory or distributed across a plurality of memories. When the memory 600 is composed of a plurality of memories, the plurality of memories may be physically separated. The memory 600 may include at least one of volatile memory and non-volatile memory. Volatile memory includes Static Random Access Memory (SRAM) or Dynamic Random Access Memory (DRAM), while non-volatile memory includes flash memory.

The processor 620 may include at least one core capable of executing at least one instruction. The processor 620 may execute instructions stored in the memory 600. The processor 620 may consist of a single processor or a plurality of processors.

The storage 640 maintains stored data even if power supplied to the computing device 60 is cut off. For example, the storage 640 may include non-volatile memory or may include a storage medium such as a magnetic tape, an optical disk, or a magnetic disk. A program stored in the storage 640 may be loaded into the memory 600 before being executed by the processor 620. The storage 640 may store files written in a program language, and a program created from the files by a compiler may be loaded into the memory 600. The storage 640 may store data to be processed by the processor 620 and/or data processed by the processor 620.

The input/output interface 660 may provide an interface with an input device such as a keyboard or a mouse and/or an output device such as a display device or a printer. The user may trigger execution of a program by the processor 620 through the input device and/or check the processing results of the processor 620 through the output device.

The communication interface 680 may provide access to an external network. The computing device 60 may communicate with other devices through the communication interface 680.

Each element of the apparatus or method in accordance with the present invention may be implemented in hardware or software, or a combination of hardware and software. The functions of the respective elements may be implemented in software, and a microprocessor may be implemented to execute the software functions corresponding to the respective elements.

Various embodiments of systems and techniques described herein can be realized with digital electronic circuits, integrated circuits, field programmable gate arrays (FPGAs), application specific integrated circuits (ASICs), computer hardware, firmware, software, and/or combinations thereof. The various embodiments can include implementation with one or more computer programs that are executable on a programmable system. The programmable system includes at least one programmable processor, which may be a special purpose processor or a general purpose processor, coupled to receive and transmit data and instructions from and to a storage system, at least one input device, and at least one output device. Computer programs (also known as programs, software, software applications, or code) include instructions for a programmable processor and are stored in a "computer-readable recording medium."

The computer-readable recording medium may include all types of storage devices on which computer-readable data can be stored. The computer-readable recording medium may be a non-volatile or non-transitory medium such as a read-only memory (ROM), a random access memory (RAM), a compact disc ROM (CD-ROM), magnetic tape, a floppy disk, or an optical data storage device. In addition, the computer-readable recording medium may further include a transitory medium such as a data transmission medium. Furthermore, the computer-readable recording medium may be distributed over computer systems connected through a network, and computer-readable program code can be stored and executed in a distributive manner.

Although operations are illustrated in the flowcharts/timing charts in this specification as being sequentially performed, this is merely an exemplary description of the technical idea of one embodiment of the present disclosure. In other words, those skilled in the art to which one embodiment of the present disclosure belongs may appreciate that various modifications and changes can be made without departing from essential features of an embodiment of the present disclosure, that is, the sequence illustrated in the flowcharts/timing charts can be changed and one or more operations of the operations can be performed in parallel. Thus, flowcharts/timing charts are not limited to the temporal order.

**Claims**

1.  A method for predicting a state of a vehicle based on dynamic data, the method comprising:

    collecting driving data of the vehicle;
    detecting a change in a driving environment of the vehicle based on the driving data;
    generating dynamic data based on the driving data;
    predicting a current state of the vehicle based on the dynamic data; and
    generating a final prediction for the current state of the vehicle based on the prediction for an initial state of the vehicle and the prediction for the current state of the vehicle.

2.  The method as claimed in claim 1,
    wherein the detecting of the change in the driving environment of the vehicle comprises determining whether at least one or more of a first condition, a second condition, and a third condition, which first, second and third conditions are different from one another, are satisfied based on the driving data of the vehicle.

3.  The method as claimed in claim 2, wherein the first condition is a condition set based on a change rate of the driving data during a predetermined time interval.

4.  The method as claimed in claim 2 or 3, wherein the second condition is a condition set based on a size of the driving data.

5.  The method as claimed in any of claims 2 to 4, wherein the third condition is a condition set based on a pattern of the driving data.

6.  The method as claimed in any preceding claim, wherein:

    the generating of the dynamic data comprises adding one or more characteristics different from characteristics included in basic data based on a change in the driving environment of the vehicle, and
    each of the characteristics included in the basic data is a characteristic extracted based on an initial driving environment of the vehicle.

7.  The method as claimed in claim 6, wherein the prediction of the initial state of the vehicle is generated based on the basic data of the vehicle.

8.  An apparatus for predicting a state of a vehicle based on dynamic data, the apparatus comprising:

    at least one memory storing instructions; and at least one processor,
    wherein the at least one processor is configured to execute the instructions to perform steps of:

    collecting driving data of the vehicle;
    detecting a change in a driving environment of the vehicle based on the driving data;
    generating dynamic data based on the driving data;
    predicting a current state of the vehicle based on the dynamic data; and
    generating a final prediction for a current state of the vehicle based on the prediction for an initial state of the vehicle and the prediction for the current state of the vehicle.

9.  The apparatus as claimed in claim 8, wherein the detecting of the change in the driving environment of the vehicle comprises determining whether at least one or more of a first condition, a second condition, and a third condition, which first, second and third conditions are different from one another, are satisfied based on the driving data of the vehicle.

10. The apparatus as claimed in claim 9, wherein the first condition is a condition set based on a change rate of the driving data during a predetermined time interval.

11. The apparatus as claimed in claims 9 or 10, wherein the second condition is a condition set based on a size of the driving data.

12. The apparatus as claimed in claims 9 to 11, wherein the third condition is a condition set based on a pattern of the driving data.

13. The apparatus as claimed in any preceding claim, wherein:

    the generating of the dynamic data comprises adding one or more characteristics different from characteristics included in basic data based on the change in the driving environment of the vehicle, and
    each of the characteristics included in the basic data is a characteristic extracted based on an initial driving environment of the vehicle.

14. The apparatus as claimed in claim 13, wherein the prediction of the initial state of the vehicle is generated based on basic data of the vehicle.

| Driving data collection unit | ~101 |

| Situation change detection unit | ~103 |

| Data characteristic extraction unit | ~105 |

| First vehicle state prediction unit | ~107 |

| Second vehicle state prediction unit | ~109 |

| Vehicle state Final prediction unit | ~111 |

# FIG. 1

```
┌─────────────────────┐
│   Driving data      │ ─~101
│   collection unit   │
└─────────────────────┘
          │
          ▼
  Driving data (S210)
          │
          ▼
┌─────────────────────┐
│  Data characteristic │ ─~105
│   extraction unit    │
└─────────────────────┘
          │
          ▼
   Basic data (S220)
          │
          ▼
┌─────────────────────┐      ~107    ┌─────────────────────┐
│  First vehicle state │             │   Second vehicle    │
│   prediction unit    │   109─~      │ state prediction unit│
└─────────────────────┘              └─────────────────────┘
          │
          ▼
Initial state prediction (S230)


┌─────────────────────┐
│  Vehicle state Final │ ─~111
│   prediction unit    │
└─────────────────────┘
```

# FIG. 2

```
┌──────────────────────┐
│    Driving data      │ ─── 101
│   collection unit    │
└──────────────────────┘
            │
            ▼
   Driving data (S310)
            │
            ▼
┌──────────────────────┐
│   Situation change   │ ─── 103
│   detection unit     │
└──────────────────────┘
            │
            ▼
   Driving data (S320)
            │
            ▼
┌──────────────────────┐
Basic data ──▶│ Data characteristic │ ─── 105
│   extraction unit    │
└──────────────────────┘
            │
            ▼
   Dynamic data (S330)
```

┌──────────────────────┐           ┌──────────────────────┐
│   First vehicle state │ ─── 107   │    Second vehicle     │
│    prediction unit    │  109 ───  │  state prediction unit │
└──────────────────────┘           └──────────────────────┘

Initial state prediction      Current state prediction (S340)

```
┌──────────────────────┐
│  Vehicle state Final  │ ─── 111
│   prediction unit     │
└──────────────────────┘
            │
            ▼
   Final prediction (S350)
```

# FIG. 3

FIG. 4

```
        ┌─────────┐
        │  Start  │
        └─────────┘
             │
             ▼
   ┌───────────────────────┐
   │  Collect driving data │ ─── S510
   └───────────────────────┘
             │
             ▼
   ┌───────────────────────┐
   │    Detect change in   │ ─── S520
   │  driving environment  │
   └───────────────────────┘
             │
             ▼
   ┌───────────────────────┐
   │ Generate dynamic data │ ─── S530
   └───────────────────────┘
             │
             ▼
   ┌───────────────────────┐
   │  Predict current state│ ─── S540
   └───────────────────────┘
             │
             ▼
   ┌───────────────────────┐
   │ Generate final prediction│ ─── S550
   │ about the current state  │
   └───────────────────────┘
             │
             ▼
        ┌─────────┐
        │   End   │
        └─────────┘
```

# FIG. 5

**FIG. 6**

Europäisches
Patentamt

European
Patent Office

Office européen
des brevets

# EUROPEAN SEARCH REPORT

**Application Number**

EP 25 17 5938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/105900 A1 (TAN HUALIN [US]) 23 April 2009 (2009-04-23) * figures 1-3 * * paragraphs [0002], [0016] - [0020], [0024] - [0025] * * the whole document * | 1-14 | INV. B60W50/00 B60W40/105 B60W40/13 |
| X | DE 10 2006 023574 A1 (DAIMLER CHRYSLER AG [DE]) 22 November 2007 (2007-11-22) * figures 1-2 * * paragraphs [0002], [0006] - [0007], [0016] - [0037] * * the whole document * | 1-3,8-10 | |
| X | CN 118 894 114 A (HORIZON ZHENGCHENG SHANGHAI TECH CO LTD) 5 November 2024 (2024-11-05) * figures 1-16 * * paragraphs [0003], [0005] - [0006], [0032], [0047], [0134] - [0155] * * the whole document * | 1,6-8, 13,14 | |
| X | CN 113 650 620 A (UNIV SOUTHEAST) 16 November 2021 (2021-11-16) * figures 1-2 * * paragraphs [0002], [0006] - [0010] * * the whole document * | 1,8 | TECHNICAL FIELDS SEARCHED (IPC) B60W |

The present search report has been drawn up for all claims

| Place of search | Date of completion of the search | Examiner |
|---|---|---|
| Munich | 2 October 2025 | Dubreuil, Cédric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 5938

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2025

| Patent document cited in search report | Publication date | Patent family member(s) | Publication date |
|---|---|---|---|
| US 2009105900 A1 | 23-04-2009 | DE 102008051962 A1<br>US 2009105900 A1 | 14-05-2009<br>23-04-2009 |
| DE 102006023574 A1 | 22-11-2007 | NONE | |
| CN 118894114 A | 05-11-2024 | NONE | |
| CN 113650620 A | 16-11-2021 | NONE | |

EPO FORM P0459

For more details about this annex : see Official Journal of the European Patent Office, No. 12/82